# EUROPEAN PATENT SPECIFICATION

(11) **EP 2 335 203 B1**
(45) Date of publication and mention of the grant of the patent: **27.07.2022**
(21) Application number: 09810380.7
(22) Date of filing: 28.08.2009
(51) Int. Cl.: G06Q 20/00, G07F 7/08

(54) **MOBILE PERSONAL POINT-OF-SALE TERMINAL**
MOBILER PERSÖNLICHER KASSENTERMINAL
TERMINAL DE POINT DE VENTE PERSONNEL MOBILE

(30) Priority: 31.08.2008 US 231379
(43) Date of publication of application: 22.06.2011
(60) Divisional application: 22178221.2
(73) Proprietor: Maxim Integrated Products, Inc., San Jose, CA 95134 (US)
(72) Inventor: LEYDEN LI, Michelle, El Dorado Hills, CA 95762 (US); POPE, Steven M., Los Gatos, CA 95032 (US); ACEVES, Manuel, Sunnyvale, CA 94085 (US)
(74) Representative: Canzler & Bergmeier Patentanwälte Partnerschaft mbB
(86) International application number: PCT/US2009/004902
(87) International publication number: WO 2010/024923

(56) References cited:
- WO-A-2006/063144
- WO-A1-01/57811
- WO-A2-2005/104428
- DE-A1- 10 101 815
- DE-A1- 19 638 251
- US-A1- 2002 025 796
- US-A1- 2003 154 414
- US-A1- 2004 058 705
- US-A1- 2004 104 268
- US-A1- 2006 122 902
- US-A1- 2008 059 375
- US-A1- 2008 208 681
- US-B1- 6 234 389
- US-B1- 7 003 316

## Description

### TECHNICAL FIELD

The described embodiments relate to mobile POS terminals and related methods.

### BACKGROUND INFORMATION

Financial transactions are often made using secure electronic devices called point-of-sale (POS) terminals. In one type of common transaction, a customer wishes to make a purchase from a merchant. The customer presents a magnetic card (for example, a credit card) to the merchant. The merchant swipes the magnetic card through a magnetic card reader of the POS terminal. The magnetic card reader reads an account number from the card. The POS terminal then communicates information about the transaction and the account number to a financial verification entity or entities. The POS terminal uses encryption keys to communicate with the financial verification entity so that the customer's account number is communicated in a secure fashion. Depending on the type of transaction, there may be several secure communications back and forth between the POS terminal and the financial verification entity. The customer may, for example, at some point in the process enter a user password into the POS terminal so that the identity of the customer can be confirmed. The customer may, for example, enter a signature into the POS terminal to authorize the transaction.

It is desired to keep sensitive information of such a transaction out of the hands of thieves. If the sensitive information (such as the encryption keys used, the customer's account number, the user password, and/or evidence of the customer's signature) were to fall into the hands of a thief, the thief may be able to use the information to make unauthorized purchases or otherwise to steal money from the customer and/or merchant and/or financial institution. Significant anti-tamper circuitry and technology is therefore incorporated into the POS terminals to prevent thieves from obtaining sensitive information that might be present in the POS terminal. Unfortunately, thieves have over time become more and more ingenious and resourceful in their attempts to extract such sensitive information from POS terminals. The manufacturers of POS terminals have therefore had to, and continue to seek to, improve the anti-tamper security features and capabilities of POS terminals.

POS terminals such as the ones described above are often located in a store or other retail establishment. The customer typically travels to the store or retail establishment. If the customer decides to make a purchase, then the customer and merchant use a POS terminal that is generally hardwired at the point-of-sale location to a telephone line or hardwired network. The communications between the POS terminal and the financial verification entity described above take place across this hardwired link.

There are, however, mobile wireless POS terminals. A merchant using such a POS terminal can engage customers at locations outside the store or retail establishment. A merchant may also engage a customer for checkout at a location in the store other than at the confined exit checkout area. At times when many customers are waiting in long checkout lines, providing a merchant an ability to checkout customers standing in line using a mobile wireless POS terminal is often desirable. Mobile wireless POS terminals are also useful for merchants who sell products at outdoor locations. For example, a merchant at a farmer's market or on a boardwalk may find a mobile wireless POS terminal useful because in such outdoor locations there may be no hardwired landlines available for communication with the financial verification entity or entities.

Mobile wireless POS terminals are generally complete and dedicated POS terminal devices that include a wireless communication capability, a display, a card reader, and other input/output capabilities seen on ordinary POS terminals. These wireless devices may communicate with a central unit that in turn communicates with the financial verification entity. The hardware of the mobile wireless POS terminal is generally dedicated for use in the POS terminal function. The hardware is typically not designed to have general purpose functions other than the POS terminal function. The overall POS terminal system is therefore generally fairly expensive. A less expensive alternative is sought. A small merchant who sells products at a farmer's market, for example, may not wish to spend a large amount of money to buy and operate a sophisticated mobile wireless POS terminal system.

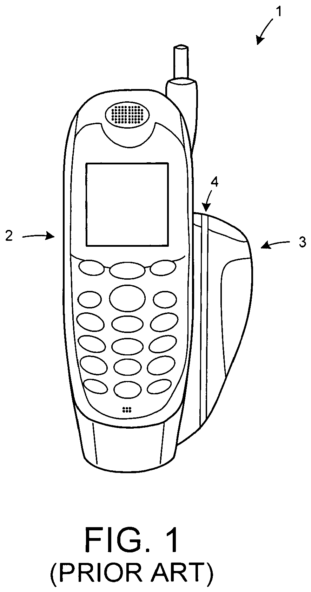

Figure 1 (Prior Art) is an illustration of a less expensive mobile wireless POS terminal 1. POS terminal 1 includes a cellular telephone 2 that is mass produced for general cellular telephone use. POS terminal 1 also includes a POS terminal attachment 3 that engages, and fits onto, cellular telephone 2. A merchant, such as a merchant selling products in a public park, might carry such a POS terminal 1. If a sale is to be made, then a customer's credit card may be swiped through the card reader slot 4. A magnetic card stripe reader of attachment 3 reads information from the magnetic card. This information is then encrypted by secure circuitry within attachment 3 before communication to cellular telephone 2 for wireless communication from cellular telephone 2 to a financial verification entity. An example of such a mobile wireless POS terminal is a device called "PowerSwipe", formerly available from Virtual Fonlink Inc., previously doing business as Creditel. For additional information on mobile wireless POS terminal 1, see U.S. Patent No. 7,003,316 (the subject matter of which is incorporated herein by reference).

Unfortunately the prior art device of Figure 1 appears not to have been very well received. An improved mobile wireless POS terminal device is sought.

US 2004/0058705 A1 discloses a docking module for a cellular telephone which allows the cellular telephone and docking module to function as a secure point-of-sale system to accept payment via payment cards, for sales or service transactions, as well as activate or recharge phone cards, activate or recharge stored value (Gift) cards, and activate or recharge IC cards. The secure point-of-sale system will also perform check validation sequences that will allow checks to be safely accepted for sales and service transactions. The docking module control assembly, when activated, will cause the cellular telephone to dial a registration computer for approval utilizing the local cellular network and countrywide public switching telecommunications network (PSTN). The registration computer will validate the transaction with the appropriate bank or card issuing body, and a response will be sent via the return path advising whether the transaction has been accepted or denied.

US 2006/0122902 A1 discloses a secure mobile phone-point of sale (POS) system including a mobile phone integrated with a secure PIN Entry Device (PED) module. The secure PED module is integrated with a mobile phone via the phone's serial port or directly to the phone's Printed Circuit Board Assembly (PCBA). The secure PED module conforms to security standards imposed by the payment card industry. The secure mobile phone-POS system has the functionality of both the secure PED and the mobile phone and the look and feel of the mobile phone.

### SUMMARY

A customer mobile personal point-of -sale terminal (CMPPT) includes a Point-of-Sale (POS) sleeve portion that slidingly engages to, and slidably disengages from, a cellular telephone portion. When the POS sleeve portion is fully slidably engaged with the cellular telephone portion, a connector on the POS sleeve portion mates with a corresponding connector on the cellular telephone portion. Secure POS circuitry within the POS sleeve portion communicates through these mated connectors with the cellular telephone portion. The cellular telephone portion is a standard cellular telephone that is mass produced for general purpose cellular telephone use. The secure POS circuitry with the POS sleeve portion uses the cellular telephone portion to communicate encrypted information to and from a financial transaction verification entity (FTVE).

In some examples, the secure POS circuitry with the POS sleeve portion also uses keys on the cellular telephone portion to receive a Personal Identification Number (PIN), and/or other customer identification information, from a user of the CMPPT. When "banking" PIN information is received, secure protected hardware is provided all the way up to the keys. Additional hardware security features on the iPhone are advisable. The user password employed in other embodiments provides an additional layer of protection to the data entered through the cellular telephone portion, but does not provide the security normally provided to "banking" PIN information. When the POS sleeve portion is set up for the first time, the initial PIN or user password is locket to the serial number of the cellular telephone portion. The initial PIN and/or user password plus the serial number are then used to generate a unique ID used in subsequent operations.

The POS sleeve portion also includes a mechanism (for example, a magnetic stripe reader) for reading in a merchant account number at the point -of-sale into the POS sleeve portion. Rather than a customer entering sensitive financial information into a merchant's POS terminal (MPT) at the point-of-sale and having to trust the merchant with such sensitive information as is conventional, merchant information is entered into the customer's CMPPT. Throughout the transaction, the CMPPT remains in the possession of the customer. The merchant information entered into the customer's CMPPT may include information indicative of a merchant account into which the merchant is to receive funds as part of a transaction.

In one novel aspect, the CMPPT initiates a financial transaction by sending customer account information and merchant account information to the FTVE. The customer does not enter sensitive customer information (such as a customer account number) into an MPT. The FTVE receives information about the transaction (for example, the amount of the transaction) directly from the MPT. After receiving the merchant account information and the customer account information from the CMPPT, and after receiving the transaction information from the MPT, the FTVE verifies the transaction, and after authorization, the FTVE forwards approval codes to both the CMPPT and to the MPT.

In one example, encryption keys in the POS sleeve portion that are used to engage in secure communications with the FTVE are only for use by the individual customer in possession of the CMPPT. The encryption keys are only usable to communicate between the individual customer's CMPPT and the FTVE. If the CMPPT becomes lost or stolen, the keys within the CMPPT need not be erased. Rather, the FTVE is alerted and the FTVE no longer uses the keys to receive and encrypt and decrypt messages with CMPPTs, thereby effectively disabling the lost or stolen CMPPT.

Although a CMPPT can be used to initiate a transaction by first entering merchant account information into the CMPPT at the point-of-sale, it is to be understood that any necessary merchant account information needed to initiate the transaction can be communicated from the merchant to the FTVE without such information being entered into the CMPPT. Any way of sending the required customer, merchant and transaction information to the FTVE in a secure manner and associating the information there at the FTVE can be employed so long as the customer account information passes directly from the CMPPT to the FTVE and does not pass to the merchant or the merchant's POS terminal.

Further details and embodiments and techniques are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 (Prior Art) is a diagram of a prior art mobile POS terminal.
Figure 2 is a perspective exploded view of a customer mobile personal point-of-sale terminal (CMPPT) 10 in accordance with one novel aspect.
Figure 3 is a diagram that illustrates various steps in a financial transaction method carried out with the CMPPT 10 of Figure 2.
Figure 4 is a flowchart of the financial transaction method of Figure 3.

### DETAILED DESCRIPTION

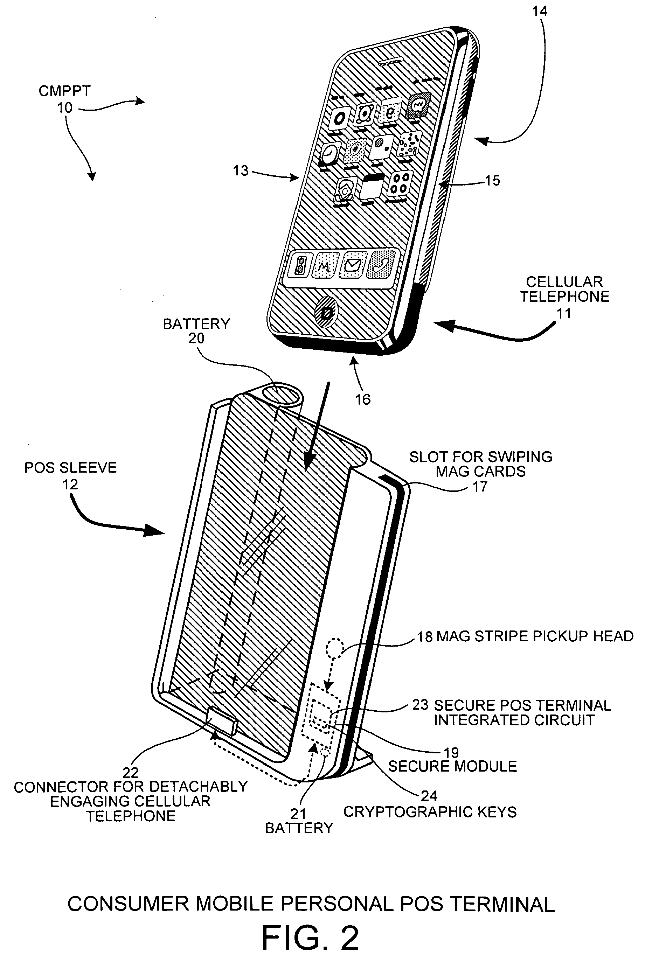

Figure 2 is a perspective exploded view of a customer mobile personal point-of-sale terminal (CMPPT) 10 in accordance with one novel aspect. The use of the term "customer" here indicates that this CMPPT device 10, in one novel method, is owned by and in the possession of an individual customer, as opposed to a merchant or other person. The use of the term "personal" here indicates that this CMPPT device 10 is personalized for the individual customer. In one example, CMPPT device 10 stores a personal encryption key(s) that is (are) used only for communication with the individual CMPPT of the individual customer. The personal encryption key(s) is (are) not used by any other customer owning a similar CMPPT device.

CMPPT 10 includes a cellular telephone 11 portion and a POS sleeve portion 12. Cellular telephone 11 may, for example, be a cellular telephone named the iPhone, available from Apple Computer, Inc. of Cupertino, California. POS sleeve portion 12 has a sliding surface that can slidingly engage to, and slidingly disengage from, cellular telephone 11. In the illustrated example, the sliding surface of POS sleeve 12 slidingly engages a substantial portion of a left side 13 of cellular telephone 11, a substantial portion of a back side 14 of cellular telephone 11, a substantial portion of a right side 15 of cellular telephone 11, and a substantial portion of a bottom side 16 of cellular telephone 11. The terms "left", "right", "back" and "bottom" are relative terms and refer to sides of cellular telephone 11 when considered from the viewing perspective of Figure 2. When cellular telephone 11 is slidingly engaged with POS sleeve 12, the front face of cellular telephone 11 is visible and is not covered by sleeve 10. The front face of the cellular telephone is the side of the cellular telephone that includes keys for interacting with the cellular telephone.

POS sleeve portion 12 includes a mechanism for reading merchant information into POS sleeve portion 12. In one example, this mechanism involves a slot 17 for swiping magnetic cards and a magnetic stripe pickup head 18. POS sleeve portion 12 also includes a secure module 19, a first battery 20, a second battery 21, and a connector 22. Connector 22 makes electrical contact with a corresponding mating connector (not shown) on cellular telephone portion 11 when the cellular telephone portion 11 is fully slid down into POS sleeve portion 12. Secure module 19 includes several components including an integrated circuit package (not shown), a secure POS terminal integrated circuit 23, and an anti-tamper security mesh (not shown). Cryptographic keys 24 used for secure communication are stored in a secure memory portion of integrated circuit 23. The secure memory, which is a type of Static Random Access Memory (SRAM) in this example, is backed up and powered by second battery 21. Second battery 21 has a relatively small capacity as compared to first battery 20. Second battery is not used to power cellular telephone portion 11, but rather is dedicated to powering secure module 19 and its anti-tamper circuitry and its secure memory. For additional information on an example of a secure module 19 and secure POS terminal integrated circuit 23, see: 1) U.S. Patent Number 7,343,496, by Peter Hsiang et al., entitled "Secure Transaction Microcontroller With Secure Boot Loader", and 2) U.S. Patent Application Serial Number 11/786,871, entitled "Package-on-Package Secure Module Having Anti-Tamper Mesh In The Substrate Of The Upper Package", filed April 13, 2007, by Steven M. Pope et al. (the entire subject matter of these two documents is incorporated herein by reference).

In an embodiment in which cellular telephone 11 is an iPhone, a native application is downloaded from an "application store" to the iPhone and controls the interoperability of the iPhone and POS sleeve portion 12. For example, the native application transfers information to POS sleeve portion 12 that is input using the keypad functionality of the iPhone. Information entered through the keypad of the iPhone is transferred through connector 22 to POS sleeve portion 12. The native application also controls the wireless transmission of information entered into and/or processed by POS sleeve portion 12. In embodiments in which cellular telephone 11 is not an iPhone, the cell phone operating system itself includes the functionality for wirelessly transmitting information that is received from and output to POS sleeve portion 12.

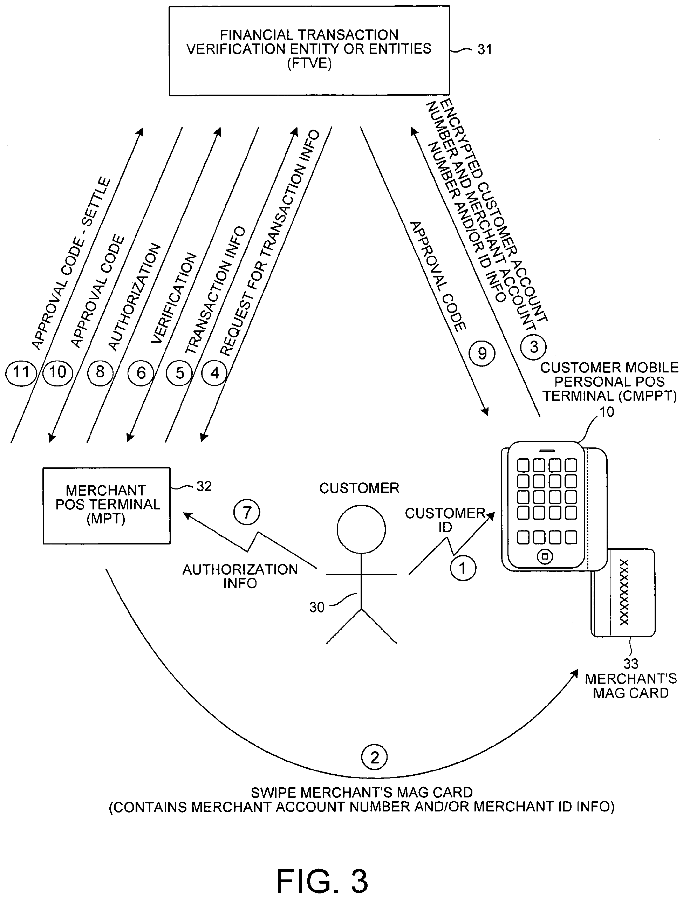

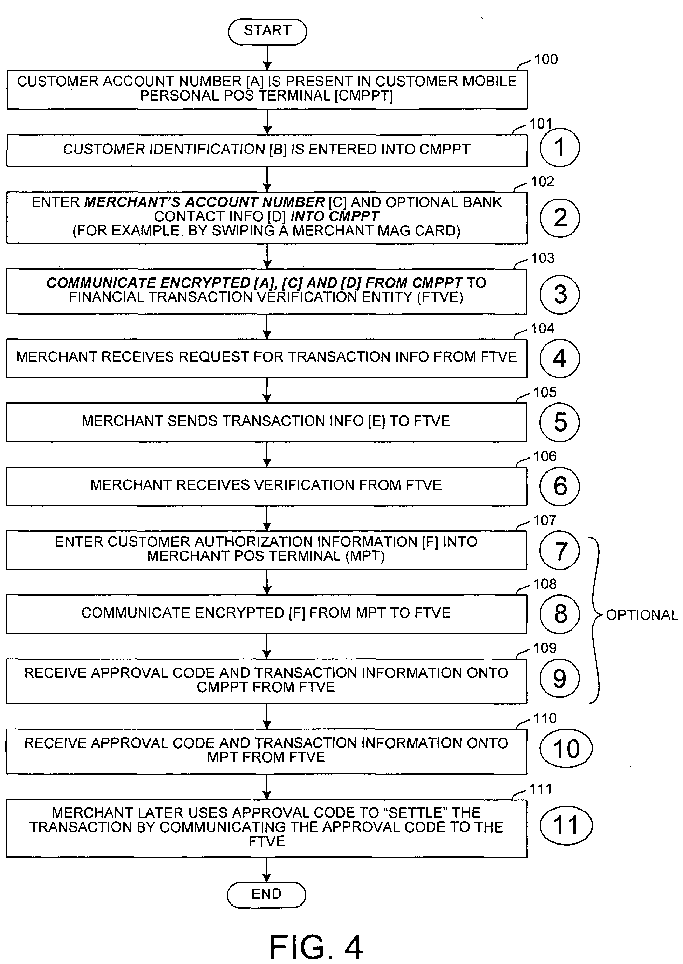

One example of an operation of CMPPT 10 is set forth below in connection with Figures 3 and 4. In this example, a customer 30 has possession of CMPPT 10. The cellular telephone 11 of the CMPPT 10 is of general utility and is used by customer 30 to engage in ordinary cellular telephone communications that do not involve POS transactions. Customer 30 has purchased sleeve 12 and has slidingly engaged cellular telephone portion 11 and POS sleeve portion 12 to form CMPPT 10. One or more of the cryptographic keys 24 stored in sleeve 12 are associated only with customer 30 and the customer's individual CMPPT 10, and are not associated with any other individual or CMPPT. The keys are therefore "personal" to customer 30.

A financial transaction verification entity or entities (FTVE) 31 can communicate with other POS terminals and other CMPPTs using cryptographic keys that are different than the specific cryptographic keys 24 used to communicate with CMPPT 10. If customer 30 loses CMPPT 10 or if CMPPT 10 is stolen, then keys 24 stored in CMPPT 10 do not need to be erased to prevent a thief from making unauthorized transactions. Rather, FTVE 31 simply stops using the personal encryption keys associated with CMPPT 10, thereby effectively disabling CMPPT 10.

Initially, a customer account number [A] is present in CMPPT 10 (step 100). In one example, customer 30 has loaded the customer account number [A] into CMPPT 10 upon initially receiving CMPPT 10. Customer 30 loaded account number [A] by swiping a magnetic credit card bearing the customer's account number through slot 17. The magnetic stripe pickup head 18 supplies the customer's account number information to secure POS terminal integrated circuit 23. In this way, the customer may have loaded multiple different account numbers into CMPPT 10. Once loaded, customer 30 no longer needs to carry the credit cards if the customer carries CMPPT 10. The account numbers of the customer's accounts are stored in CMPPT 10.

Next, customer 30 in this example decides to make a purchase. The customer may be present along with the merchant in an outdoor environment, or may be present in a store operated by the merchant, or may be elsewhere. CMPPT 10 is, however, in the immediate custody and possession of customer 30.

To initiate a transaction, customer 30 enters (step 101) customer identification information [B] into CMPPT 10. In one example, customer identification information [B] is a user password. CMPPT 10 checks the customer identification information to verify that the person who entered the customer identification information is the authorized customer 30 (and owner of CMPPT 10) rather than a thief or imposter. The action of entering the customer identification information [B] is indicated in Figure 3 by the arrow identified by the encircled numeral "1". This encircled "1" numeral corresponds to step 101 in Figure 4 that is similarly identified with the encircled "1" symbol.

Next, the merchant enters information into CMPPT 10 that identifies a merchant account. In one example, this information is a merchant account number [C] and merchant identification information [D]. This action is indicated in Figure 3 by the arrow identified by the encircled numeral "2". This encircled "2" numeral corresponds to step 102 in Figure 4 that is similarly identified with the encircled "2" symbol. In this example, the merchant has a magnetic card 33 that stores a merchant account number [C] as well as merchant identification information [D]. This merchant information [C] and [D] is entered into CMPPT 10 of the customer by swiping the merchant's magnetic card 33 through slot 17 of the customer's CMPPT 10. At no time does the customer provide the merchant with a customer credit account number or a customer credit card. Customer 30 need not swipe a magnetic card through a POS terminal maintained by the merchant in order to carry out the desired transaction.

Next, CMPPT 10 sends customer account number [A], merchant account number [C], and merchant identification information [D] to a FTVE 31. This action is indicated in Figure 3 by the arrow identified by the encircled numeral "3". This encircled "3" numeral corresponds to step 103 in Figure 4 that is similarly identified with the encircled "3" symbol. Secure POS terminal integrated circuit 23 uses the encryption keys 24 to encrypt this information and to engage in secure communications with FTVE 31. Cellular telephone portion 11 serves as a communication mechanism through which sleeve 12 and FTVE 31 communicate. Unencrypted sensitive financial information does not pass from POS sleeve portion 12 to cellular telephone portion 11, does not pass through cellular telephone portion 11, and is not stored in cellular telephone portion 11.

Next, FTVE 31 sends the merchant a request for information about the transaction. This action is indicated in Figure 3 by the arrow identified by the encircled numeral "4". This encircled "4" numeral corresponds to step 104 in Figure 4 that is similarly identified with the encircled "4" symbol. The customer's account number is not communicated to the merchant in this communication. In the illustrated example, the request for information is communicated in a secure manner to a merchant POS terminal (MPT) 32.

Next, the merchant responds to the request by sending transaction information [E] back to FTVE 31. Transaction information [E] may include a transaction amount that is to be reserved for the merchant. This action is indicated in Figure 3 by the arrow identified by the encircled numeral "5". This encircled "5" numeral corresponds to step 105 in Figure 4 that is similarly identified with the encircled "5" symbol. The transaction information is the same transaction information that is conventionally communicated in a conventional credit card verification operation from a merchant's POS terminal to the acquirer (merchant's bank) as the first communication of a credit card transaction. In the novel method of Figures 3 and 4, however, this transaction information is supplied by merchant's POS terminal 32, whereas the remainder of the information that is conventionally communicated from the merchant's POS terminal to FTVE 31 is instead communicated directly from CMPPT 10 to FTVE 31.

Next, FTVE 31 receives the transaction information, verifies the customer's account number, verifies the transaction amount, reserves the indicated transaction amount for the merchant, and sends a verification back to MPT 32. At this point, the reserved amount is usually not actually transferred from the customer's account to the merchant's account, but rather the transaction amount is reserved in the customer's account. The communication of the verification is indicated in Figure 3 by the arrow identified by the encircled numeral "6". This encircled "6" numeral corresponds to step 106 in Figure 4 that is similarly identified with the encircled "6" symbol.

Next, customer 30 authorizes (step 107) the transaction. In one example of Figure 3, customer 30 authorizes the transaction by entering authorization information [F] into MPT 32 by signing a signature capture pad portion of MPT 32. In another example, rather than customer 30 authorizing the transaction by entering authorization information [F] into MPT 32, the authorization information [F] is entered into CMPPT 10 and is communicated from CMPPT 10 to FTVE 31.

Next, in the example of Figure 3, the authorization information [F] is communicated (step 108) in encrypted form from MPT 32 to FTVE 31. The sending of authorization information [F] to FTVE 31 is indicated in Figure 3 by the arrow identified by the encircled numeral "8". This encircled "8" numeral corresponds to step 108 in Figure 4 that is similarly identified with the encircled "8" symbol.

Next, FTVE 31 sends an approval code to CMPPT 10 and also sends the approval code to MPT 32. The sending of the approval code to CMPPT 10 is indicated in Figure 3 by the arrow identified by the encircled numeral "9". This encircled "9" numeral corresponds to step 109 in Figure 4 that is similarly identified with the encircled "9" symbol. The sending of the approval code to MPT 32 is indicated in Figure 3 by the arrow identified by the encircled numeral "10". This encircled "10" numeral corresponds to step 110 in Figure 4 that is similarly identified with the encircled "10" symbol.

At this point, both the customer's CMPPT 10 and the merchant's MPT 32 have received the approval code. In addition to the approval code, FTVE 31 can send CMPPT 10 other information about the transaction such as the items purchased, item prices, transaction time, transaction date, merchant's name, and merchant's address. This transaction information can be logged in either cellular telephone portion 10 and/or POS sleeve portion 12 for future use. At this point in the transaction, customer 30 generally receives merchandise and the customer and merchant have no more interaction in setting up the transaction.

Later, typically at the end of the business day, the merchant's MPT 32 sends (step 111) the approval code for the authorized transaction in a group along with the approval codes for other authorized transactions to FTVE 31 for settlement. Settlement involves the transfer of funds from the customer's account to the merchant's account.

In one example, the encryption keys 24 that are used to engage in secure communications with FTVE 31 are only for use by the individual customer in possession of the CMPPT 10. The encryption keys are only usable to communicate between one particular CMPPT and the FTVE. If the customer's CMPPT 10 becomes lost or stolen, then the keys 24 within CMPPT 10 need not be erased. Rather, FTVE 31 is alerted and the FTVE no longer uses the keys to receive and encrypt and decrypt messages with CMPPTs, thereby effectively disabling the lost or stolen CMPPT 10.

In one novel aspect, FTVE 31 uses a Global Positioning System (GPS) functionality within cellular telephone portion 10 to monitor the location of CMPPT 10. Position information can be used by an intelligent system within FTVE 31 to detect transactions that are unlike the usual transactions engaged in the actual owner of CMPPT 10. In addition, FTVE 31 may use cellular telephone portion 11 to make voice contact with customer 30 in the event of a questionable transaction so that customer 30 can verify that the transaction is not being performed by a thief or unauthorized individual. In some examples, a biometric security sensor is provided on POS sleeve portion 12 to provide some or all of the customer identification information [B]. The biometric security sensor may, for example, be a touch-strip-type fingerprint sensor as is commonly employed on laptop computers to prevent unauthorized use of the laptop. In order for an individual to use CMPPT 10, the individual is required to provide an authorized fingerprint scan at step 101 in the method of Figure 4.

Although details of various communications within one type of POS transaction are described above for illustrative purposes, usage of the CMPPT described above whereby merchant information is entered into the CMPPT at the point-of -sale has general applicability and is not limited to any one particular type of financial transaction involving particular sub-communications between the CMPT, the FTVE, and the MPT. Transaction information need not be communicated from the MPT to the FRVE, rather any necessary or desired transaction information may be communicated in whole or in part from the CMPPT to the FTVE. The transaction need not involve a verification, an authorization and an approval code. Moreover, if the transaction involves a verification, an authorization and an approval code, the verification need not be communicated from the FTVE to the MPT and the authorization need not be communicated from the MPT to the FTVE. The CMPPT can be used to carry out the authorization such that the merchant receives an approval code but the customer's user password or signature does not pass through the merchant's POS terminal. The approval code need not be communicated in a secure encrypted fashion, and the approval code need not be received into a POS sale terminal of the merchant. The approval code may, for example, be received into to an ordinary computer maintained by the merchant.

Although the use of a CMPPT to communicate customer account information to the FTVE in a secure manner without that information being communicated to the merchant is described above in connection with a credit card transaction, the use of a CMPPT to communicate customer account information is not limited to credit card transactions but rather has general applicability and applies to other types of transactions including money card (for example, smart card) transactions and debit card transactions. Although the use of a CMPPT to initiate a transaction is described above in connection with merchant account information being entered into the CMPPT at the point-of -sale, it is to be understood that any necessary merchant account information needed to initiate the transaction can be communicated from the merchant to the FTVE without such information being entered into the CMPPT. Any way of sending the required customer, merchant and transaction information to the FTVE in a secure manner and associating the information there can be employed so long as the customer account information passes directly from the CMPPT to the FTVE and does not pass to the merchant or the merchant's POS terminal. Although the cellular telephone functionality and the POS circuit functionality are embodied in different physical structures that are then fixed together as described above to form a CMPPT, the POS circuit functionality can be integrated into a cellular telephone. Accordingly, various modifications, adaptations, and combinations of various features of the described embodiments can be practiced without departing from the scope of the invention as set forth in the claims.

## Claims

1. A method comprising:
(a) storing customer account information in a customer mobile personal point-of-sale terminal (CMPPT), wherein the CMPPT includes a cellular telephone portion and a point-of-sale attachment portion; this CMPPT is personalized for an individual customer by storing (an) encryption key(s) that is(are) used for communication with the individual CMPPT of the individual customer;
the method further comprising:
receiving a PIN or user password at the CMPPT, wherein when the point-of-sale attachment portion is set up for the first time, the initial PIN or user password is locked to a serial number of the cellular telephone portion, and the initial PIN or user password plus the serial number are then used to generate a unique ID used in subsequent operations;
(b) after the storing of customer account information in the CMPPT according (a) receiving merchant account information into the CMPPT; and
(c) initiating a transaction by sending the customer account information and the merchant account information from the CMPPT to a financial transaction verification entity (FTVE).

2. The method of Claim 1, wherein the point-of-sale attachment portion includes a secure memory and an anti-tamper mesh, wherein the secure memory stores at least one encryption key, and wherein said at least one encryption key is used to engage in a secure communication with the FTVE.

3. The method of Claim 1, wherein the transaction is taken from the group consisting of: a credit card transaction, a debit card transaction, a money card transaction, and a transaction involving a direct transfer of funds from one bank account to another bank account.

4. The method of Claim 1, wherein the receiving of (b) occurs at a point-of-sale, and wherein the customer account information of (a) is loaded into the CMPPT at a location other that at the point-of-sale.

5. The method of Claim 1, wherein the merchant account information is an account number.

6. The method of Claim 1, wherein the merchant account information is information that identifies an account of a merchant.

7. The method of Claim 1, wherein the merchant account information is information that identifies a merchant.

8. The method of Claim 1, further comprising:
(d) receiving a financial transaction approval code onto the CMPPT via the cellular telephone portion of the CMPPT, wherein the approval code is an approval code for the transaction, and wherein the transaction involves a transfer of funds from a customer account indicated by the customer account information to another account.

9. The method of Claim 1, wherein the sending of (c) results in a communication being sent to a merchant point-of-sale terminal (MPT).

10. The method of Claim 1, wherein the customer account information is sent in (c) from the cellular telephone portion in encrypted form.

11. The method of Claim 1, wherein the transaction involves a customer and a merchant, and wherein the transaction occurs without the merchant receiving the customer account information.

12. A system comprising a customer mobile personal point-of-sale terminal (CMPPT) for storing customer account information in the customer mobile personal point-of-sale terminal (CMPPT) and a financial transaction verification entity (FTVE),
the CMPPT comprising:
a cellular telephone portion and a point-of-sale attachment portion;
means, fixed to the cellular telephone portion, for receiving merchant account information when the means stores customer account information, the means also being for communicating the merchant account information and the customer account information to the cellular telephone portion in encrypted form;
(a) this CMPPT is personalized for an individual customer by storing (an) encryption key(s) that is(are) used for communication with the individual CMPPT of the individual customer;
wherein the system comprises:
the CMPPT receiving a PIN or user password,
wherein when the point-of-sale attachment portion is set up for the first time, the initial PIN or user password is locked to a serial number of the cellular telephone portion,
and the initial PIN or user password plus the serial number are then used to generate a unique ID used in subsequent operations,
the CMPPT receives merchant account information after the storing of customer account information in the CMPPT according (a);
wherein this CMPPT comprises means for initiating a transaction by sending the customer account information and the merchant account information from the CMPPT to the financial transaction verification entity (FTVE).

13. The system of Claim 12, wherein the means includes a secure memory that stores an encryption key, the secure memory being substantially covered by an anti-tamper mesh, wherein the means is also for using the encryption key to encrypt the merchant account information and the customer account information.

14. The system of Claim 13, wherein the means is for receiving personal identification information from the cellular telephone portion, and wherein the means is also for checking the personal identification information to confirm that the apparatus is being used by an authorized user.

## Patentansprüche

1. Verfahren, umfassend:
(a) Speichern von Kundenkontoinformationen in einem mobilen persönlichen Kassenterminal (CMPPT) für Kunden, wobei der CMPPT einen Mobiltelefonteil und einen Kassen-Anschlussteil umfasst; wobei dieser CMPPT für einen einzelnen Kunden personalisiert wird, indem (ein) Verschlüsselungsschlüssel gespeichert wird (werden), der (die) für die Kommunikation mit dem individuellen CMPPT des einzelnen Kunden verwendet wird (werden);
das Verfahren ferner umfassend:
Empfangen einer PIN oder eines Benutzerpassworts am CMPPT, wobei, wenn der Kassen-Anschlussteil zum ersten Mal eingerichtet wird, die anfängliche PIN oder das Benutzerpasswort an eine Seriennummer des Mobiltelefonteils gebunden wird, und die anfängliche PIN oder das Benutzerpasswort plus die Seriennummer dann verwendet werden, um eine eindeutige ID zu erzeugen, die in nachfolgenden Vorgängen verwendet wird;
(b) nach dem Speichern von Kundenkontoinformationen in dem CMPPT gemäß (a) Empfangen von Händlerkontoinformationen in dem CMPPT; und
(c) Initiieren einer Transaktion durch Senden der Kundenkontoinformationen und der Händlerkontoinformationen vom CMPPT an eine Finanztransaktions-Verifizierungseinheit (FTVE).

2. Verfahren nach Anspruch 1, wobei der Kassen-Anschlussteil einen sicheren Speicher und ein Antimanipulationsnetz enthält, wobei der sichere Speicher mindestens einen Verschlüsselungsschlüssel speichert, und wobei der mindestens eine Verschlüsselungsschlüssel verwendet wird, um eine sichere Kommunikation mit der FTVE einzugehen.

3. Verfahren nach Anspruch 1, wobei die Transaktion aus der Gruppe ausgewählt wird, die besteht aus: einer Kreditkartentransaktion, einer Bankkartentransaktion, einer Geldkartentransaktion und einer Transaktion, die eine direkte Überweisung von Geldern von einem Bankkonto auf ein anderes Bankkonto beinhaltet.

4. Verfahren nach Anspruch 1, wobei der Empfang von (b) an einer Verkaufsstelle erfolgt, und wobei die Kundenkontoinformationen von (a) an einem anderen Ort als an der Verkaufsstelle in den CMPPT geladen werden.

5. Verfahren nach Anspruch 1, wobei die Händlerkontoinformation eine Kontonummer ist.

6. Verfahren nach Anspruch 1, wobei die Händlerkontoinformation eine Information ist, die ein Konto eines Händlers identifiziert.

7. Verfahren nach Anspruch 1, wobei es sich bei den Händlerkontoinformationen um Informationen handelt, die einen Händler identifizieren.

8. Verfahren nach Anspruch 1, zusätzlich umfassend:
(d) Empfangen eines Genehmigungscodes für eine Finanztransaktion auf dem CMPPT über den Mobiltelefonteil des CMPPT, wobei der Genehmigungscode ein Genehmigungscode für die Transaktion ist und wobei die Transaktion eine Überweisung von Geldern von einem durch die Kundenkontoinformationen angegebenen Kundenkonto auf ein anderes Konto beinhaltet.

9. Verfahren nach Anspruch 1, wobei das Senden von (c) dazu führt, dass eine Mitteilung an ein Händler-Kassenterminal (MPT) gesendet wird.

10. Verfahren nach Anspruch 1, wobei die Kundenkontoinformationen in (c) von dem Mobiltelefonteil in verschlüsselter Form gesendet werden.

11. Verfahren nach Anspruch 1, wobei die Transaktion einen Kunden und einen Händler betrifft und wobei die Transaktion stattfindet, ohne dass der Händler die Kundenkontoinformationen erhält.

12. System, das einen mobilen persönlichen Kassenterminal (CMPPT) für Kunden zum Speichern von Kundenkontoinformationen in dem mobilen persönlichen Kassenterminal (CMPPT) für Kunden und eine Finanztransaktions-Verifizierungseinheit (FTVE) umfasst,
wobei der CMPPT umfasst:
einen Mobiltelefonteil und einen Kassen-Anschlussteil;
ein am Mobiltelefonteil befestigtes Mittel zum Empfangen von Händlerkontoinformationen, wenn das Mittel Kundenkontoinformationen speichert, wobei das Mittel auch dazu dient, die Händlerkontoinformationen und die Kundenkontoinformationen in verschlüsselter Form an den Mobiltelefonteil zu übermitteln;
(a) wobei dieser CMPPT für einen individuellen Kunden personalisiert wird, indem (ein) Verschlüsselungsschlüssel gespeichert wird (werden), der (die) für die Kommunikation mit dem individuellen CMPPT des individuellen Kunden verwendet wird (werden);
wobei das System umfasst:
dass der CMPPT eine PIN oder ein Benutzerpasswort empfängt,
wobei beim erstmaligen Einrichten des Kassen-Anschlussteils die anfängliche PIN oder das Benutzerpasswort an eine Seriennummer des Mobiltelefonteils gebunden wird,
und die anfängliche PIN oder das Benutzerpasswort sowie die Seriennummer dann verwendet werden, um eine eindeutige ID zu erzeugen, die bei nachfolgenden Vorgängen verwendet wird,
der CMPPT nach der Speicherung von Kundenkontoinformationen im CMPPT gemäß (a) Informationen über das Händlerkonto empfängt;
wobei dieser CMPPT Mittel zum Einleiten einer Transaktion durch Senden der Kundenkontoinformationen und der Händlerkontoinformationen vom CMPPT an die Finanztransaktions-Verifizierungseinheit (FTVE) umfasst.

13. System nach Anspruch 12, wobei das Mittel einen sicheren Speicher umfasst, der einen Verschlüsselungsschlüssel speichert, wobei der sichere Speicher im Wesentlichen durch ein Antimanipulationsnetz abgedeckt ist, wobei das Mittel auch dazu dient, den Verschlüsselungsschlüssel zu verwenden, um die Händlerkontoinformationen und die Kundenkontoinformationen zu verschlüsseln.

14. System nach Anspruch 13, wobei das Mittel dazu dient, persönliche Identifikationsinformationen von dem Mobiltelefontelefonteil zu empfangen, und wobei das Mittel auch dazu dient, die persönlichen Identifikationsinformationen zu überprüfen, um zu bestätigen, dass die Vorrichtung von einem autorisierten Benutzer verwendet wird.

## Revendications

1. Procédé comprenant :
(a) un stockage des informations de compte client dans un terminal de point de vente personnel mobile de client (CMPPT), dans lequel le CMPPT comprend une partie de téléphone cellulaire et une partie de fixation au point de vente ; ce CMPPT est personnalisé pour un client individuel par stockage d'une (de) clé(s) de cryptage qui est (sont) utilisée(s) pour la communication avec le CMPPT individuel du client individuel ;
le procédé comprenant en outre :
la réception d'un PIN ou mot de passe utilisateur au CMPPT, dans lequel, lorsque la partie de fixation au point de vente est configurée pour la première fois, le PIN ou mot de passe utilisateur initial est lié à un numéro de série de la partie de téléphone cellulaire, et le PIN ou mot de passe utilisateur initial plus le numéro de série sont ensuite utilisés pour générer un identifiant unique utilisé dans les opérations ultérieures ;
(b) après le stockage des informations de compte client dans le CMPPT conformément à (a), recevoir des informations de compte commerçant dans le CMPPT ; et
(c) initier une transaction en envoyant les informations de compte client et les informations de compte commerçant depuis le CMPPT à une entité de vérification de transaction financière (FTVE).

2. Procédé selon la revendication 1, dans lequel la partie de fixation au point de vente comprend une mémoire sécurisée et un maillage anti-piratage, dans lequel la mémoire sécurisée stocke au moins une clé de cryptage, et dans lequel ladite au moins une clé de cryptage est utilisée pour s'engager dans une communication sécurisée avec la FTVE.

3. Procédé selon la revendication 1, dans lequel la transaction est prise dans le groupe constitué par : une transaction par carte de crédit, une transaction par carte de débit, une transaction par carte monétaire et une transaction impliquant un transfert direct de fonds d'un compte bancaire à un autre compte bancaire.

4. Procédé selon la revendication 1, dans lequel la réception de l'étape (b) a lieu à un point de vente, et dans lequel les informations de compte client de l'étape (a) sont chargées dans le CMPPT à un emplacement autre que le point de vente.

5. Procédé selon la revendication 1, dans lequel les informations de compte commerçant sont un numéro de compte.

6. Procédé selon la revendication 1, dans lequel les informations de compte commerçant sont des informations qui identifient un compte d'un commerçant.

7. Procédé selon la revendication 1, dans lequel les informations de compte commerçant sont des informations qui identifient un commerçant.

8. Procédé selon la revendication 1, comprenant en outre :
(d) recevoir un code d'approbation de transaction financière sur le CMPPT via la partie de téléphone cellulaire du CMPPT, dans lequel le code d'approbation est un code d'approbation pour la transaction, et dans lequel la transaction implique un transfert de fonds depuis un compte client indiqué par les informations de compte client vers un autre compte.

9. Procédé selon la revendication 1, dans lequel l'envoi de l'étape (c) entraîne l'envoi d'une communication à un terminal de point de vente commerçant (MPT).

10. Procédé selon la revendication 1, dans lequel les informations de compte client sont envoyées à l'étape (c) depuis la partie de téléphone cellulaire sous forme cryptée.

11. Procédé selon la revendication 1, dans lequel la transaction implique un client et un commerçant, et dans lequel la transaction se produit sans que le commerçant reçoive les informations de compte client.

12. Système comprenant un terminal de point de vente personnel mobile de client (CMPPT) pour stocker des informations du compte client dans le terminal de point de vente personnel mobile de client (CMPPT) et une entité de vérification de transaction financière (FTVE),
le CMPPT comprenant :
une partie de téléphone cellulaire et une partie de fixation au point de vente ;
un moyen, fixé à la partie de téléphone cellulaire, pour recevoir des informations de compte commerçant lorsque le moyen stocke des informations de compte client, le moyen étant également destiné à communiquer les informations de compte commerçant et les informations de compte client à la partie de téléphone cellulaire sous forme cryptée ;
(a) dans lequel, ce CMPPT est personnalisé pour un client individuel par stockage d'une (de) clé(s) de cryptage qui est (sont) utilisée(s) pour la communication avec le CMPPT individuel du client individuel ;
dans lequel le système comprend :
le CMPPT recevant un PIN ou mot de passe utilisateur,
dans lequel, lorsque la partie de fixation au point de vente est configurée pour la première fois, le PIN ou mot de passe utilisateur initial est lié à un numéro de série de la partie de téléphone cellulaire,
et le PIN ou mot de passe utilisateur initial plus le numéro de série sont ensuite utilisés pour générer un identifiant unique utilisé dans les opérations ultérieures ;
le CMPPT reçoit des informations de compte commerçant après le stockage d'informations de compte client dans le CMPPT conformément à l'étape (a) ; et
dans lequel ce CMPPT comprend un moyen pour initier une transaction en envoyant les informations de compte client et les informations de compte commerçant depuis le CMPPT à l'entité de vérification de transaction financière (FTVE).

13. Système selon la revendication 12, dans lequel le moyen comprend une mémoire sécurisée qui stocke une clé de cryptage, la mémoire sécurisée étant sensiblement couverte par un maillage anti-piratage, dans lequel le moyen est également destiné à utiliser la clé de cryptage pour crypter les informations de compte commerçant et les informations de compte client.

14. Système selon la revendication 13, dans lequel le moyen est destiné à recevoir des informations d'identification personnelle de la partie de téléphone cellulaire, et dans lequel le moyen est également destiné à vérifier les informations d'identification personnelle pour confirmer que l'appareil est utilisé par un utilisateur autorisé.
